# EUROPÄISCHE PATENTSCHRIFT

(11) **EP 1 524 147 B1**
(45) Veröffentlichungstag und Bekanntmachung des Hinweises auf die Patenterteilung: **17.03.2010**
(21) Anmeldenummer: 04021760.6
(22) Anmeldetag: 14.09.2004
(51) Int. Cl.: B60N 2/24, B60N 2/48, B60N 2/64

(54) **Sitz zur Beförderung von Personen**
Seat for the transport of persons
Siège pour le transport de personnes

(30) Priorität: 16.10.2003 DE 10348720; 02.09.2004 DE 102004042916
(43) Veröffentlichungstag der Anmeldung: 20.04.2005
(73) Patentinhaber: Lazzerini S.r.l., 60030 Monsano (IT)
(72) Erfinder: Meiller, Hermann, 92533 Wernberg-Köblitz (DE); Ott, Richard, 92245 Kümmersbruck (DE)
(74) Vertreter: Ostriga, Sonnet, Wirths & Roche

(56) Entgegenhaltungen:
- EP-A- 0 733 509
- GB-A- 2 296 655
- US-A- 4 300 249
- PATENT ABSTRACTS OF JAPAN Bd. 1997, Nr. 04, 30. April 1997 (1997-04-30) & JP 08 336439 A (BURINPU KK), 24. Dezember 1996 (1996-12-24)

## Beschreibung

Die Erfindung betrifft einen Sitz zur Beförderung von Personen, entsprechend dem Oberbegriff des Anspruchs 1.

Solche Sitze für die Personenbeförderung sind im Zusammenhang mit Personenbeförderungsmitteln, als da sind Luft-, See- und Landfahrzeuge, allgemein bekannt.

Für den Fall, dass dem oberen Endbereich einer Sitzlehne ein Kopfanlagebereich zugeordnet ist, besteht letzterer z.B. aus einer relativ zur Sitzlehne höhen- und neigeverstellbar angeordneten, ein separates Bauteil bildenden Kopfstütze.

Für den Fall, dass der Kopfanlagebereich am oberen Endbereich der Sitzlehne integriert angeschlossen ist, besteht die Möglichkeit einer Höhen- und Neigeverstellung des Kopfanlagebereichs in der Regel nicht, jedoch ist es bei einer solchen Ausführungsform vorteilhaft, dass der integriert angeschlossene Kopfanlagebereich lückenlos in den oberen Sitzlehnenbereich übergeht.

Von der US 4 883 243 ist ein nicht zur erfindungsgemäßen Gattung zählender Flugzeug-Schleudersitz bekannt, dessen Kopf- bzw. Helmanlagebereich in Normalposition eine beidendseitig offene flache Schale mit aufrechter Schalenlängsachse bildet. Die Schalenfläche ist von drei ebenen flachen starren Bauteilen begrenzt, welche im Notfall nach hinten wegklappen und eine den Helm des Piloten eng aufnehmende Höhlung freigeben.

Ähnliche Merkmale, wie die in der US 4 883 243 beschriebenen, sind in der EP 0 733 509 A1 in Verbindung mit einem Sitz für Flugpassagiere offenbart. Hierbei ist zwischen dem Kopfanlagebereich einer Sitzlehne und zwei voneinander lateral distanzierten aufblasbaren Seitenkissen eine Höhlung geschaffen, welche den Kopf des Flugpassagiers zwischen zwei nach vorn hinterschnitten zulaufenden seitlichen Kopfanlageflächen relativ eng aufnimmt. Dabei kann das Aufnahmevolumen der Höhlung durch einen die vordere Höhlenöffnung überbrückenden, den lichten Abstand zwischen den Seitenkissen bestimmenden Verstellgurt verringert oder vergrößert werden.

Durch die GB 2 296 655 A ist ein Fahrzeugsitz mit einem Kopfanlagebereich seiner Sitzlehne bekannt, welcher zwischen zwei einander etwa parallelen, in Fahrtrichtung nach vorn ragenden seitlichen Kopfanlageflächen und einer die Hinterkopffläche des Fahrgastes abstützenden Hinterkopfanlagefläche eine Höhlung bildet. Diese Höhlung nimmt den Raumbedarf des hinteren Bereichs sowie der beiden seitlichen Bereiche des Fahrgastkopfes mit Übermaß, insbesondere mit reichlichem Übermaß, auf. Eine solche Höhlung, deren Begrenzungsflächen - insbesondere ganzflächig - gepolstert sind, verschaffen dem Fahrgast, insbesondere im Zusammenhang mit einem Omnibussitz, Sicherheit und einen erheblichen Komfort. Wesentlich ist, dass der Fahrgast sich mit seinem Hinterkopf an der Hinterkopfanlagefläche abstützen kann, so dass bei einer insbesondere crashbedingten Beschleunigung eine schlagartige Belastung des Fahrgastkopfes weitgehend vermieden wird.

Außerdem wird bei dem von der GB 2 296 655 A bekannten Sitz der Kopf des Fahrgastes in einem gewissen Maße auch bei seitlich wirkenden Querbeschleunigungen abgefangen.

Insbesondere im Zusammenhang mit Omnibussitzen gestattet die Höhlung des durch die GB 2 296 655 A bekannten Sitzes den Raumbedarf des Fahrgastkopfes mit Übermaß, insbesondere mit reichlichem Übermaß, aufzunehmen. Auf diese Weise kann der Fahrgast einen Schlaf- und Ruhekomfort genießen, der ihm außer einer Abstützung an der hinteren Kopfanlagefläche zusätzlich links- und rechtsseitig eine seitliche Kopfanlagefläche ermöglicht. Wegen des räumlichen Übermaßes der Höhlung wird ein Gefühl des Eingezwängtseins zwischen den beiden seitlichen Kopfanlageflächen vermieden.

Mit dem Fahrgastsitz gemäß der GB 2 296 655 A vergleichbare Sitze sind außerdem in der JP 08 336 439 A und in der US 4 300 249 beschrieben.

Ausgehend von einem Sitz zur Beförderung von Personen gemäß der GB 2 296 655 A, liegt der Erfindung die Aufgabe zugrunde, den Kopfanlagebereich hinsichtlich Sicherheit und Komfort für den Fahrgast weiter zu verbessern.

Diese Aufgabe wird gemeinsam mit den Merkmalen des Oberbegriffs des Anspruchs 1 und dessen kennzeichnenden Merkmalen gelöst.

Die Höhlung des Kopfanlagebereichs mit ihren beiden seitliche Schrägflächen bildenden seitlichen Kopfanlageflächen und mit ihrer die Höhlung unten begrenzenden, ebenfalls eine Schrägfläche bildenden Querfläche ergibt den Vorteil einer weitestgehend abstützenden Anpassung der Höhlung an die individuelle Körpergröße unterschiedlicher Fahrgäste, insbesondere einer Anpassung an unterschiedliche Körpergrößen.

Der spitzwinklige Verlauf der inneren und äußeren Begrenzungsränder der beiden seitlichen schrägen Kopfanlageflächen unter Einbeziehung der unteren Querfläche ist vorteilhaft, weil der Fahrgast, wenn er zum Einnehmen einer Ruheposition seinen Körper ein wenig nach unten verlagert, eine zwar nicht einzwängende, jedoch genauere seitliche Führung seines Kopfes erhält.

Je nach der Länge der Horizontalerstreckung der die Höhlung unten begrenzenden Querfläche, die eine nach unten hin geneigte untere Schrägfläche bildet, verlaufen die Konturen der inneren und äußeren Begrenzungsränder der seitlichen Kopfanlageflächen unter Einbeziehung der Konturen der Begrenzungsränder der unteren Querfläche etwa entsprechend einer sich nach oben erweiternden Parabel oder entsprechend eines sich nach oben erweiternden Trapezes.

Der Sitz kann erfingdungsgemäß weiterhin so ausgestaltet sein, dass die Sitzlehne im Anschluss unterhalb der Höhlung eine sich quer im Wesentlichen über die gesamte Sitzlehnenbreite erstreckende konkave Einwölbung zur Aufnahme des Schulterbereichs eines Fahrgastes aufweist.

Weiterhin sieht die Erfindung bei einem an die Sitzlehne integriert angeschlossenen Kopfanlagebereich vor, dass dessen Scheitelfläche, ausgehend von der Längsmittelebene der Sitzlehne, sich einseitig seitlich abgeschrägt nach unten verlaufend erstreckt. Für den Fall, dass in Omnibussen Sitze mit diesen gleichartig ausgebildeten Sitzlehnen hintereinander angeordnet sind, erhält der Fahrgast die Möglichkeit, aus seiner Sitzposition heraus, in welcher sich sein Kopf innerhalb der Höhlung befindet, über die abgeschrägte Scheitelfläche des Vordersitzes ungehindert hinwegzuschauen.

Der erfindungsgemäße Sitz ist für jegliche Art von Personenbeförderung im Zusammenhang mit Personenbeförderungsmittein, als da sind Luft-, Seeund Landfahrzeuge, geeignet.

In den Zeichnungen sind bevorzugte Ausführungsbeispiele entsprechend der Erfindung schematisch dargestellt, es zeigt
Fig. 1 in räumlicher Darstellungsweise einen Fahrgastsitz für einen Omnibus,
Fig. 2 eine isolierte Ansicht der Sitzlehne gemäß Fig. 1, etwa entsprechend dem dort eingetragenen mit II bezeichneten Ansichtspfeil,
Fig. 3 einen vertikalen Längsschnitt durch die Sitzlehne entsprechend der Schnittlinie III-III in Fig. 2,
Fig. 4 eine im Vergleich zu Fig. 2 vergrößerte Darstellung einer Draufsicht, etwa entsprechend dem in Fig. 2 mit IV bezeichneten Ansichtspfeil und
Fig. 5 in Anlehnung an die Darstellungsweise gemäß Fig. 2 einen Sitz entsprechend einer anderen Ausführungsform.

In den Zeichnungen sind einander analoge Elemente bzw. einander analoge Bauteile trotz ihrer gegebenenfalls unterschiedlichen Ausbildung stets mit denselben Bezugszeichen versehen.

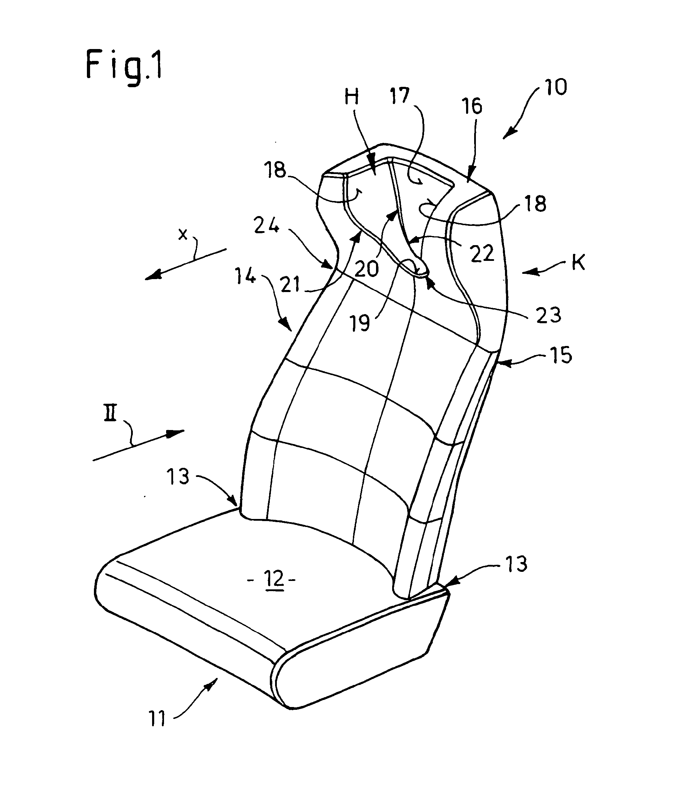

Der in Fig. 1 mit 10 bezeichnete für einen Omnibus bestimmte Fahrgastsitz 10 weist einen in nicht näher bezeichneter Weise am Einbaufeld eines Omnibusses zu halterndes Sitzteil 11 mit einer Sitzfläche 12 auf, von deren hinterem Bereich 13 eine Sitzlehne 14 aufragt. An den oberen Endbereich 15 der Sitzlehne 14 schließt sich ein Kopfanlagebereich K integriert an.

Der Kopfanlagebereich K weist eine seinen Scheitelbereich 16 nach oben hin durchdringende und im übrigen in Fahrtrichtung x nach vorn offene Höhlung H auf. Die Höhlung H berücksichtigt mit Übermaß, insbesondere mit reichlichem Übermaß, den Raumbedarf des hinteren sowie der seitlichen Bereiche eines Fahrgastkopfes.

Das Tiefste der Höhlung H ist von einer die Hinterkopffläche des Fahrgastes abstützenden Hinterkopfanlagefläche 17 gebildet. Beidseitig der Hinterkopfanlagefläche 17 schließt sich jeweils eine seitliche Kopfanlagefläche 18 an. Die Begrenzungsflächen der Höhlung H sind, ebenso wie der vordere Sitzlehnenbereich, ganzflächig gepolstert.

Es ist vorstellbar, dass sich der Hinterkopf eines nicht dargestellten Fahrgastes an der Hinterkopfanlagefläche 17 abstützen kann, so dass bei einer insbesondere crashbedingten Beschleunigung eine schlagartige Belastung des Fahrgastkopfes weitestgehend vermieden wird.

Außerdem ist der Kopf des Fahrgastes in der Höhlung H durch die seitlichen Kopfanlageflächen 18 gewissermaßen zentriert, was sowohl dem Komfortals auch dem Sicherheitsbedürfnis des Fahrgastes entspricht. Dabei wird wegen des räumlichen Übermaßes der Höhlung H ein Gefühl des Eingezwängtseins zwischen den beiden seitlichen Kopfanlageflächen 18 vermieden.

Die seitlichen Kopfanlageflächen 18 sind mittels einer die Höhlung H unten begrenzenden Querfläche 19 miteinander verbunden. Sowohl die seitlichen Kopfanlageflächen 18 als auch die untere Querfläche 19 bilden nach außen, d.h. in Fahrtrichtung x nach vorn, divergierende Schrägflächen, welche von der Hinterkopfanlagefläche 17 ausgehen.

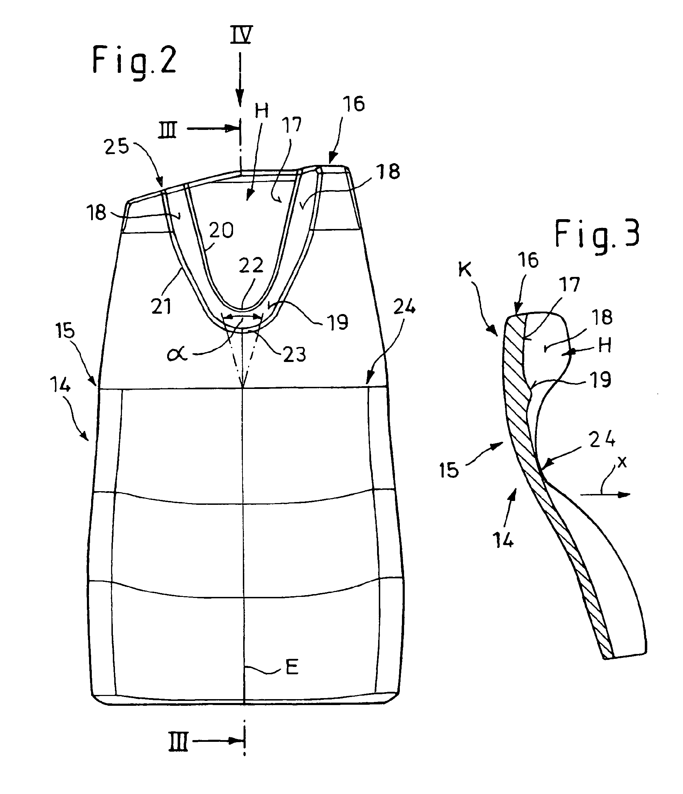

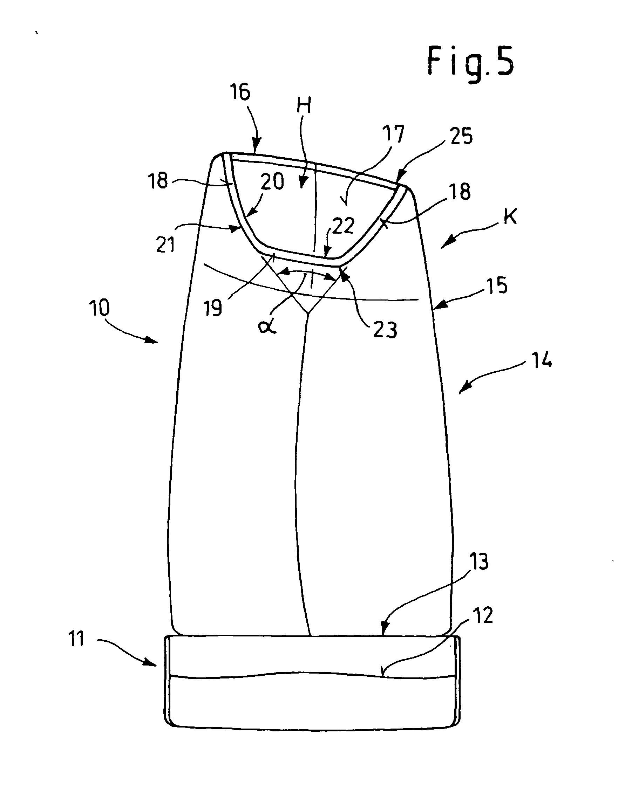

Die Schrägflächen der seitlichen Kopfanlageflächen 18 einschließlich der Konturen ihrer inneren und äußeren Begrenzungsränder 20, 21 bilden einen spitzen Winkel α miteinander, wie aus den Fig. 2 und 5 hervorgeht.

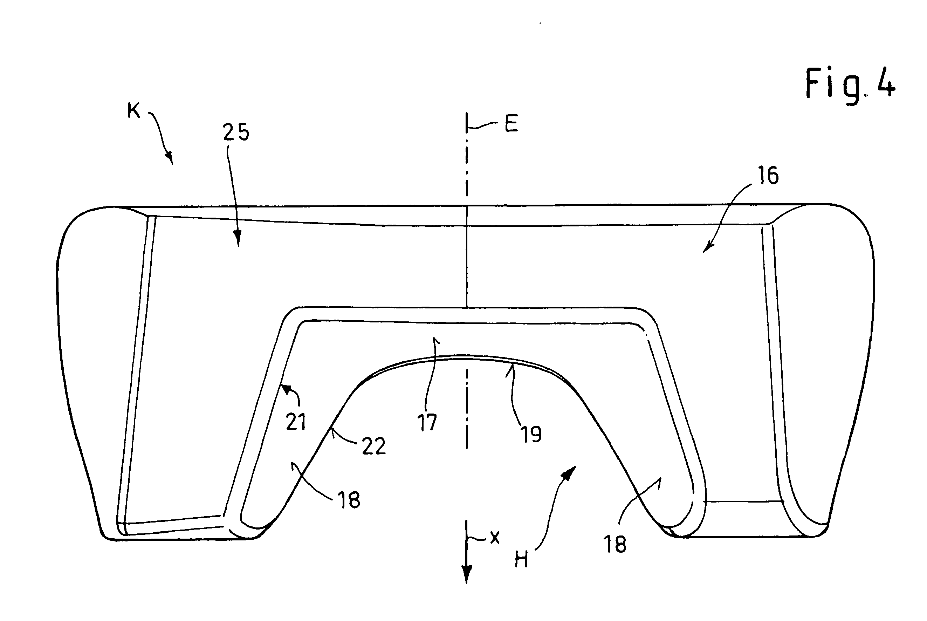

Je nach Länge der Horizontalerstreckung der die Höhlung H unten begrenzenden Querfläche 19 verlaufen die Konturen der inneren und äußeren Begrenzungsränder 20, 21 unter Einbeziehung der Konturen der Begrenzungsränder 22, 23 etwa entsprechend einer sich nach oben erweiternden Parabel (Ausführungsform gemäß den Fig. 1-4) oder entsprechend eines sich nach oben erweiternden Trapezes (Ausführungsform gemäß Fig. 5).

Die eine Schrägfläche bildende untere Querfläche 19 ist dazu geeignet, den unteren Hinterkopfbereich sowie den Nackenansatz des Fahrgastes aufzunehmen.

Der spitzwinklige Verlauf der inneren und äußeren Begrenzungsränder 20,21 der beiden seitlichen schrägen Kopfanlageflächen 18 zueinander unter Einbeziehung der unteren Querfläche 19 mit deren Begrenzungsrändern 22, 23 ist vorteilhaft, weil der Fahrgast, wenn er zum Einnehmen einer Ruheposition seinen Körper ein wenig nach unten verlagert, eine zwar nicht einzwängende, jedoch genauere seitliche Führung seines Kopfes erhält.

Auch ist anhand der Zeichnungen vorstellbar, dass die Höhlung H mit ihren beiden seitlichen Schrägflächen 18 und mit ihrer die Höhlung H unten begrenzenden, ebenfalls eine Schrägfläche bildenden Querfläche 19 den Vorteil einer weitestgehend abstützenden Anpassung der Höhlung H an die individuellen Körpermaße unterschiedlicher Fahrgäste, insbesondere an unterschiedliche Körpergrößen, gestattet.

Im Zusammenhang mit den Fig. 1, 2 und 3 wird deutlich, dass die Sitzlehne 14 auf ihrer in Fahrtrichtung x weisenden Vorderseite im Anschluss unterhalb der Höhlung H eine sich quer im wesentlichen über die gesamte Sitzlehnenbreite erstreckende konkave Einwölbung 24 zur Aufnahme des Schulterbereichs eines Fahrgastes aufweist.

Aus den Fig. 2 und 5 wird deutlich, dass sich die Fläche des Scheitelbereichs 16 des Kopfanlegebereichs K, ausgehend von der Längsmittelebene E der Sitzlehne 14, sich mit dem Bereich 25 einseitig abgeschrägt seitlich nach unten verlaufend erstreckt.

Für den Fall, dass in Omnibussen Sitze mit solchen gleichartig ausgebildeten Sitzlehnen hintereinander angeordnet sind, erhält der Fahrgast die Möglichkeit, aus seiner Sitzposition heraus, in welcher sich sein Kopf innerhalb der Höhlung H befindet, über die abgeschrägte Scheitelfläche 25 des Vordersitzes ungehindert hinwegzuschauen.

## Patentansprüche

1. Sitz (10) zur Beförderung von Personen, mit einem am Einbaufeld eines Beförderungsmittels, wie z.B. eines Omnibusses, zu halternden Sitzteil (11), an dessen Sitzfläche (12) hinten (bei 13) eine Sitzlehne (14) aufragt, deren oberem Endbereich (15) ein Kopfanlagebereich (K) zugeordnet ist, oder an deren oberem Endbereich (15) sich ein Kopfanlagebereich (K) integriert anschließt, wobei der Kopfanlagebereich mindestens eine gepolsterte Fläche und eine Höhlung (H) aufweist, welche mindestens teilweise den Raumbedarf des hinteren Bereichs sowie der beiden seitlichen Bereiche eines Fahrgastkopfes berücksichtigt, wobei das Tiefste der Höhlung (H) von einer die Hinterkopffläche des Fahrgastes abstützenden Hinterkopfanlagefläche (17) gebildet ist, an welche sich beidseitig jeweils eine seitliche Kopfanlagefläche (18) anschließt, und wobei die Höhlung (H) den Raumbedarf des hinteren Bereichs sowie der beiden seitlichen Bereiche des Fahrgastkopfes mit Übermaß, insbesondere mit reichlichem Übermaß, berücksichtigt, **dadurch gekennzeichnet, dass** die beiden seitlichen Kopfanlageflächen (18), ausgehend von der Hinterkopfanlagefläche (17), seitliche Schrägflächen bildend, nach außen divergieren, dass die Schrägflächen der seitlichen Kopfanlageflächen (18) einschließlich der Konturen ihrer inneren und äußeren Begrenzungsränder (20, 21) einen nach unten zulaufenden spitzen Winkel (α) miteinander bilden, dass die seitlichen Kopfanlageflächen (18) mittels einer die Höhlung (H) unten begrenzenden Querfläche (19) miteinander verbunden sind, und dass die untere Querfläche (19) eine nach unten hin geneigte untere Schrägfläche bildet, welche insbesondere den unteren Hinterkopfbereich sowie den Nackenansatz des Fahrgastes aufnehmen kann.

2. Sitz nach Anspruch 1, **dadurch gekennzeichnet, dass** die Konturen der inneren und äußeren Begrenzungsränder (20, 21) der seitlichen Kopfanlageflächen (18) unter Einbeziehung der Konturen der Begrenzungsränder (22, 23) der unteren Querfläche (19) etwa entsprechend einer sich nach oben erweiternden Parabel verlaufen.

3. Sitz nach Anspruch 1, **dadurch gekennzeichnet, dass** die Konturen der inneren und äußeren Begrenzungsränder (20, 21) der seitlichen Kopfanlageflächen unter Einbeziehung der Konturen der Begrenzungsränder (22, 23) der unteren Querfläche (19) etwa entsprechend eines sich nach oben erweiternden Trapezes verlaufen.

4. Sitz nach einem der Ansprüche 1 bis 3, **dadurch gekennzeichnet, dass** die Sitzlehne (14) im Anschluss unterhalb der Höhlung (H) eine sich quer im wesentlichen über die gesamte Sitzlehnenbreite erstreckende konkave Einwölbung (24) zur Aufnahme des Schulterbereichs eines Fahrgastes aufweist.

5. Sitz nach einem der Ansprüche 1 bis 4, **dadurch gekennzeichnet, dass** bei einem an die Sitzlehne (14) integriert angeschlossenen Kopfanlagebereichs (K) die Scheitelfläche (16) des letzteren, ausgehend von der Längsmittelebene (E) der Sitzlehne (14), sich einseitig seitlich abgeschrägt (bei 25), nach unten verlaufend, erstreckt.

## Claims

1. Seat (10) for transporting persons, said seat having a seat part (11) which is to be mounted at the installation site on a means of transport, such as an omnibus for example, and on whose seating face (12) there projects upwards at the rear (at 13) a seat back (14) with whose upper end region (15) a head-contact region (K) is associated or whose upper end region (15) is adjoined by a head-contact region (K) in an integrated manner; wherein said head-contact region has at least one padded face and a recess (H) which allows, at least partially, for the space required by the rear region as well as the two lateral regions of a passenger's head; wherein the deepest point of the recess (H) is formed by a rear head-contact face (17) which supports the rear face of the passenger's head and which is adjoined, on each of its two sides, by a lateral head-contact face (18); and wherein the recess (H) allows, with an excess, in particular an ample excess, for the space required by the rear region as well as the two lateral regions of the passenger's head;
**characterised in that**
the two lateral head-contact faces (18) diverge outwards, starting from the rear head-contact face (17), in a manner forming lateral oblique faces; that said oblique faces of the lateral head-contact faces (18), including the contours of their inner and outer delimiting edges (20, 21), form a downwardly converging acute angle (α) with one another; that the lateral head-contact faces (18) are connected to one another by means of a transverse face (19) that delimits the recess (H) at the bottom; and that the lower transverse face (19) forms a lower oblique face which is inclined downwards and which is capable of receiving, in particular, the passenger's lower rear head region as well as the base of the neck.

2. Seat according to claim 1,
**characterised in that** the contours of the inner and outer delimiting edges (20, 21) of the lateral head-contact faces (18), including the contours of the delimiting edges (22, 23) of the lower transverse face (19), extend approximately in accordance with a parabola that widens upwards.

3. Seat according to claim 1,
**characterised in that** the contours of the inner and outer delimiting edges (20, 21) of the lateral head-contact faces, including the contours of the delimiting edges (22, 23) of the lower transverse face (19), extend approximately in accordance with a trapezium that widens upwards.

4. Seat according to one of claims 1 to 3,
**characterised in that**, following on below the recess (H), the seat back (14) has a concave inward curvature (24), that extends substantially over the entire width of the seat back, for receiving a passenger's shoulder region.

5. Seat according to one of claims 1 to 4,
**characterised in that**, in the case of a head-contact region (K) which is connected to the seat back (14) in an integrated manner, the apical face (16) of said head-contact region extends, starting from the longitudinal central plane (E) of the seat back (14), in a manner extending downwards and sloping away laterally on one side (at 25).

## Revendications

1. Siège (10) pour le transport de personnes, avec une partie de siège (11) à maintenir sur la zone de montage d'un moyen de transport, tel que, par exemple, un omnibus, partie de siège sur la surface d'assise (12) de laquelle, à l'arrière (en 13) monte un dossier (14), à la zone d'extrémité supérieure (15) duquel est associée une zone d'appui-tête (K), ou à la zone d'extrémité supérieure (15) duquel se raccorde, de manière intégrée, une zone d'appui-tête (K), la zone d'appui-tête présentant au moins une surface rembourrée et une cavité (H), prenant en considération au moins partiellement le besoin de place de la zone arrière ainsi que des deux zones latérales d'une tête de passager, le plus profond de la cavité (H) étant formé par une surface d'appui pour l'arrière de la tête (17), soutenant la surface de l'arrière de la tête du passager, à laquelle se raccorde, de part et d'autre, chaque fois une surface latérale (18) d'appui de tête, et la cavité (H) prenant en considération, avec une surépaisseur, en particulier avec une surépaisseur ample, le besoin de place de la zone arrière ainsi que des deux zones latérales de la tête du passager, **caractérisé en ce que** les deux surfaces latérales (18) d'appui de tête, en partant de la surface d'appui de l'arrière de la tête (17), divergent vers l'extérieur, en formant des faces obliques latérales, **en ce que** les faces obliques des surfaces latérales (18) d'appui de tête, y compris des contours de leurs bords de délimitation intérieurs et extérieurs (20, 21), forment ensemble un angle (α) aigu pointant vers le bas, **en ce que** les surfaces latérales (18) d'appui de tête sont reliées ensemble au moyen d'une face transversale (19) délimitant vers le bas la cavité (H), et **en ce que** la face transversale (19) inférieure forme une face oblique inférieure inclinée vers le bas, pouvant recevoir en particulier la zone inférieure de l'arrière de tête, ainsi que le début de la nuque du passager.

2. Siège selon la revendication 1, **caractérisé en ce que** les contours des bords de délimitation intérieurs et extérieurs (20, 21) des surfaces d'appui latérales (18) de tête s'étendent en incluant les contours des bords de délimitation (22, 23) de la face transversale (19) inférieure, en correspondant à peu près à une parabole allant en s'élargissant en évoluant vers le haut.

3. Siège selon la revendication 1, **caractérisé en ce que** les contours des bords de délimitation intérieurs et extérieurs (20, 21) des surfaces latérales d'appui de tête s'étendent en incluant les contours des bords de délimitation (22, 23) de la face transversale (19) inférieure, en correspondant à peu près à un trapèze allant en s'élargissant en évoluant vers le haut.

4. Siège selon l'une des revendications 1 à 3, **caractérisé en ce que** le dossier (14), en raccordement au-dessous de la cavité (H), présente une courbure (24) concave s'étendant transversalement, sensiblement sur toute la largeur de dossier, pour recevoir la zone d'épaule d'un passager.

5. Siège selon l'une des revendications 1 à 4, **caractérisé en ce que**, dans le cas d'une zone d'appui-tête (K) raccordée de manière intégrée au dossier (14), la surface de sommet (16) de cette dernière s'étend, en partant du plan médian longitudinal (E) du dossier (14), inclinée (en 25) latéralement sur un côté, en évoluant vers le bas.
